# EUROPÄISCHE PATENTANMELDUNG

(11) **EP 1 136 315 A1**
(43) Veröffentlichungstag der Anmeldung: **26.09.2001**
(21) Anmeldenummer: 01107021.6
(22) Anmeldetag: 21.03.2001
(51) Int. Cl.: B60N 2/68, B21D 39/03

(54) **Fügeverbindung zweier Bleche**

(30) Priorität: 21.03.2000 DE 10013728
(71) Anmelder: ATL Engineering GmbH, 42859 Remscheid (DE)
(72) Erfinder: Klooss, Peter, 42929 Wermelskirchen (DE)
(74) Vertreter: Eichler, Peter, Dipl.-Ing.

(57) **Zusammenfassung**

Fügeverbindung zweier Bleche, insbesondere zweier Bleche einer Sitzrücklehne, insbesondere eines Kraftfahrzeugs, mit einem ersten Blech, das eine abgewinkelte Blechkante (11) hat, die an einem eine Randstruktur (20) aufweisenden zweiten Blech (12) anliegt und in einem Anlagebereich gefügt ist.

Um eine verbesserte Befestigung der Bleche (10,12) aneinander zu erreichen, wird die Fügeverbindung so ausgebildet, daß das zweite Blech (12) mit einer vorbestimmten Anzahl von Durchsteckschlitzen (13) versehen ist, und daß das erste Blech (10) an seiner abgewinkelten Blechkante (11) durch die Durchsteckschlitze (13) hindurchgesteckte und abgewinkelte Laschen (14) hat, die an einer dem ersten Blech (10) abgewendeten Blechfläche (12') des zweiten Blechs (12) und der Randstruktur (20) abgewendet gefügt sind.

## Beschreibung

Die Erfindung bezieht sich auf eine Fügeverbindung zweier Bleche, insbesondere zweier Bleche einer Sitzrücklehne, insbesondere eines Kraftfahrzeugs, mit einem ersten Blech, das eine abgewinkelte Blechkante hat, die an einem eine Randstruktur aufweisenden zweiten Blech anliegt und in einem Anlagebereich gefügt ist.

Eine Schweißverbindung mit den vorgenannten Merkmalen ist bei einer Sitzrücklehne eines Kraftfahrzeugs bekannt. Die beiden Bleche umschließen in einem Teilbereich des Lehnenaufbaus einen Hohlraum und die abgewinkelte Blechkante ist von diesem Hohlraum weg nach außen abgewinkelt und dort in dem Anlagebereich verschweißt. Der Anlagebereich verbreitert die Sitzrücklehne in unerwünschter Weise. Diese Verbreiterung ist nicht unbeträchtlich, da die anzuwendenden Schweißwerkzeuge nicht zu unterschreitende Abmessungen haben. Infolgedessen ergeben sich Einflüsse entweder auf die Ausbildung der Randstruktur oder wenn deren Änderungen nicht akzeptabel sind, auf die Breite des mit den beiden Blechen gebildeten Bauteils. Beides ist unerwünscht.

Der Erfindung liegt daher die Aufgabe zugrunde, eine Fügeverbindung zweier hochbelasteter Bleche so zu gestalten, daß ihre Ausbildung und die Ausbildung der Randstruktur von der Ausbildung der Fügeverbindung unbeeinflußt sind und sich auch eine Verbesserung der Verbindungsfestigkeit ergibt.

Diese Aufgabe wird dadurch gelöst, daß das zweite Blech mit einer vorbestimmten Anzahl von Durchsteckschlitzen versehen ist, und daß das erste Blech an seiner abgewinkelten Blechkante durch die Durchsteckschlitze hindurchgesteckte und abgewinkelte Laschen hat, die an einer dem ersten Blech abgewendeten Blechfläche des zweiten Blechs und der Randstruktur abgewendet gefügt sind.

Für die Erfindung ist von Bedeutung, daß für die beiden Bleche vor ihrem Fügen ein spezieller Zusammenbau vorhanden ist. Hierzu ist das erste Blech mit die abgewinkelte Blechkante bildenden Laschen ausgebildet, die durch Durchsteckschlitze des zweiten Blechs hindurchgesteckt sind. Die hindurchgesteckten Laschen sind von der Randstruktur abgewendet mit dem zweiten Blech gefügt. Es wird mithin als wesentliches erreicht, daß die Fügestellen bei unveränderter Struktur in einen Bereich verlagert sind, in dem sie nicht stören. Insbesondere bleibt der Bereich der Randstruktur unbeeinträchtigt. Daher kann diese ohne Rücksichtnahme auf die Fügestellen ausgebildet sein, beispielsweise so schmal wie möglich. Dann kann auch die Struktur, die von den beiden Blechen gebildet wird, hinsichtlich ihrer Außenabmessungen optimiert sein. Insbesondere kann die Sitzrücklehne eines Kraftfahrzeugs so breit wie möglich sein, um damit etwaigen Stabilitätsanforderungen zu genügen. Diese können ganz erheblich sein, abhängig z.B. von der geforderten Anlenkung der Sitzrücklehne am Sitz und/oder von der Anordnung von Befestigungsstellen eines Rückhaltegurts an der Sitzrücklehne. Die Verbesserung der Verbindungsfestigkeit beruht auf der formschlüssigen Verbindung der beiden Bleche im Durchsteckbereich.

Die Anwendung der Erfindung ist jedoch keineswegs auf Fügeverbindungen für Sitzrücklehnen eines Kraftfahrzeugs beschränkt. Sie kann vielmehr überall dort mit Vorteil angewendet werden, wo es auf die Ausbildung einer Randstruktur ankommt, die in ihrer Ausgestaltung von einer in ihrer Nähe durchzuführenden Fügeverbindung beeinträchtigt werden könnte und wo es auf eine Verbesserung der Verbindungsfestigkeit ankommt.

Die Fügeverbindung kann dahingehend ausgebildet werden, daß das erste Blech in einem Winkel zum zweiten Blech angeordnet ist. Alle Winkelanordnungen der Bleche zueinander bleiben von dem Fügen unbeeinträchtigt, da diese auf der dem im Winkel angeordneten ersten Blech abgewendeten Seite erfolgt. Das steigert die Freizügigkeit der relativen Anordnung der Bleche zueinander.

Besonders Vorteilhaft ist es, die Fügeverbindung so auszubilden, daß das zweite Blech mit dem ersten Blech eine im Querschnitt geschlossene hohle Struktur bildet. In diesem Fall liegt die Fügestelle im Zuge der Kontur der geschlossenen hohlen Struktur. Die Freizügigkeit der Ausbildung geschlossener hohler Strukturen wird dadurch verbessert.

Des weiteren ist es zu bevorzugen, daß die beiden Bleche in Kantenbereichen der von ihnen gebildeten hohlen Struktur gefügt sind. Hier kann die Abwinkelung der Blechkante des ersten Blechs zu Stabilisierungszwecken des Kantenbereichs herangezogen werden. Das verbessert die Belastbarkeit der von den Blechen gebildeten Struktur.

Eine bedeutsame Ausgestaltung der Fügeverbindung ist dadurch gekennzeichnet, daß das zweite Blech im Bereich seiner Durchsteckschlitze zum ersten Blech hin abgekröpft ist und die abgewinkelten Laschen des ersten Blechs in Abkröpfungen des zweiten Blechs mit diesem bündig angeordnet sind. Es ergibt sich eine außenbündige Ausbildung der Fügeverbindung, bei der die Laschen also nicht als außen störende Erhebungen vorhanden sind, auf die ggf. Rücksicht genommen werden müßte. Ein weiterer Vorteil der Abkröpfung ist es, daß der Durchsteckschlitz aus der Ebene des zweiten Blechs verlagert wird, wobei die Abkröpfung das erste Blech auf einem Abstand zu dem zweiten Blech hält, der durch das Ausmaß der Abkröpfung bestimmt ist. Infolgedessen liegen die Kanten des ersten Blechs nicht am zweiten Blech an und es kann bei dynamischen Belastungen der Fügeverbindung nicht dazu kommen, daß beide Bleche aneinander reiben, was beispielsweise mit störenden Quietschgeräuschen verbunden sein könnte. Letztere wären insbesondere bei Sitzrücklehnen von Kraftfahrzeugen infolge der dort auftretenden Biege- und Torsionsbelastungen zu befürchten.

In spezieller Anwendung kann die Fügeverbindung so ausgestaltet werden, daß das zweite Blech eine Blechschale einer Sitzrücklehne eines Kraftfahrzeugsitzes ist, und daß das erste Blech als zu einer sitzenden Person U-förmig vorspringendes Formteil ausgebildet ist, das mit zwei abgewinkelten Blechwänden an dem zweiten Blech befestigt ist. Insbesondere bei dieser Ausgestaltung können die vorbeschriebenen Ausbildungen der Fügeverbindung vorteilhaft eingesetzt werden.

Bei der vorbeschriebenen Ausführungsform läßt sich zweckmäßigerweise eine Weiterbildung dahingehend vornehmen, daß die Blechschale einen dem Formteil parallelen Spannstreifen aufweist, der den Durchsteckschlitzen mit Abstand benachbart ist. Der Spannstreifen dient einer Fixierung eines Bezugs der Sitzrücklehne und kann wegen des von ihm abgewendeten Fügens freizügig ausgebildet werden.

Außerdem ist es möglich, daß zwischen dem Spannstreifen und dem Formteil ein Rücklehnenbeschlagteil in der Nähe von Durchsteckschlitzen angeordnet sind. Derartige Beschlagteile sind üblicherweise nur beschränkt dick, so daß sie auch dann zwischen den Spannstreifen und das Formteil passen, wenn der Spannstreifen relativ dicht am Formteil angeordnet ist.

Für das Herstellen der Fügeverbindung ist es von Vorteil, wenn die Laschen durch die Durchsteckschlitze hindurchgesteckte, Fügepunkte bildende Verformungen aufweisen. Es wird eine Kontaktbildung zwischen den beiden Blechen verbessert, worauf es insbesondere ankommt, wenn mehrere Fügestellen gemeinsam hergestellt werden.

Das Fügen kann mit herkömmlichen Techniken durchgeführt werden. Zu bevorzugen ist es aber, daß die Fügeverbindung so ausgebildet, daß das Fügen als Schweißung oder Klebung ausgeführt ist. Für die Schweißung ist das Punktschweißen zu bevorzugen, während bei der Klebung eine Kontaktklebung und/oder eine Aushärtungsklebung beispielsweise mit Wärmeaushärtungzum Einsatz kommen. Durch das Verkleben, insbesondere auch durch ein Kleben anstelle eines Schweißens zwischen beabstandeten Schweißstellen, kann je nach Belastung und Anwendung eine Reduzierung von Laschen und Schlitzen erfolgen.

Es ist möglich, die Fügeverbindung so auszuführen, daß zwischen zwei gefügten Laschen des ersten Blechs mindestens eine Lasche vorhanden ist, die durch einen Durchsteckschlitz hindurchgesteckt und abgewinkelt ist, oder daß das erste Blech zwischen zwei gefügten Laschen laschenfrei ausgebildet und mit dem zweiten, bedarfsweise hier von Durchsteckschlitzen freien Blech stirnseitig verklebt ist. Bei solchen Fügeverbindungen wird die Herstellungszeit verkürzt, weil Fügestellen ausgelassen werden. Bezüglich der Verbindungsfestigkeit hat das Weglassen von Fügestellen jedoch nur begrenzte Wirkung, weil auf eine Verbesserung der Verbindungsfestigkeit infolge der formschlüssigen Verbindung der beiden Bleche im Durchsteckbereich nicht verzichtet wird, wenn Laschen durch Durchsteckschlitze hindurchgesteckt und abgewinkelt sind. Wenn das erste Blech zwischen zwei gefügten Laschen mit seiner Stirnseite bzw. Kante mit dem zweiten Blech verklebt ist, kann auch dies die Verbindungsfestigkeit verbessern.

Die Erfindung bezieht sich auch auf ein Verfahren zum Verbinden zweier hochbelasteter Bleche, insbesondere zweier Bleche einer Sitzrücklehne, insbesondere eines Kraftfahrzeugs, bei dem ein erstes Blech mit einer abgewinkelten Blechkante an ein zweites Blech angelegt und in einem Anlagebereich gefügt wird. Im Sinne der o.g. Aufgabe kann das vorgenannte Verfahren dahingehend verbessert werden, daß als zweites Blech ein solches mit einer vorbestimmten Anzahl von Durchsteckschlitzen verwendet wird, und daß als erstes Blech eines mit vorstehenden Laschen verwendet wird, die durch die Durchsteckschlitze hindurchgesteckt werden, wonach ein Abwinkeln der Blechkante im Bereich der Blechlaschen erfolgt, die danach an einer dem ersten Blech abgewendeten Blechfläche des zweiten Blechs verschweißt oder verklebt werden. Ein solches Verfahren ist insbesondere vorteilhaft, wenn das zweite Blech in der Nähe der Fügung eine Randstruktur aufweist, die freizügig ausgebildet werden soll, also ohne Beeinträchtigung durch die konstruktive Gestaltung der Fügestelle und durch den Fügevorgang selbst. Dabei kann angenommen werden, daß die Herstellung der Blechlaschen als Kante des ersten Blechs unproblematisch ist, da sie in ein und demselben Arbeitsgang mit dem Herstellen des Außenumrisses des ersten Blechs erzeugt werden, z.B. durch Stanzen. Dementsprechend sind auch die Durchsteckschlitze des zweiten Blechs in einfacher Weise beim Herstellen des Außenumfangs des zweiten Blechs z.B. durch Stanzen und/oder durch Verformen des zweiten Blechs mit Abkröpfungen und/oder mit Randstrukturen in einem einzigen Arbeitsgang herzustellen.

Das vorbeschriebene Verfahren kann dahingehend weitergebildet werden, daß das erste Blech mit einer Matrize zu einem U-förmigen Formteil verformt wird, mit dessen Blechlaschen das zweite Blech mit seinen Durchsteckschlitzen zum Verformen der Laschen zusammengesteckt wird. Das Zusammenstecken schließt sich massenfertigungsgerecht an die zuvor erfolgte Herstellung der beiden Bleche an.

Nach dem Zusammenstecken der beiden Bleche kann so verfahren werden, daß das Verformen der Blechlaschen und das anschließende Verschweißen in derselben Matrize erfolgt, wobei letztere als Schweißgegenelektrode fungiert. Damit wird ein Verlagern des zu einem Formteil verformten ersten Blechs zu einer besonderen Schweißeinrichtung vermieden, was einer Verbesserung und Beschleunigung der Produktion dient.

Beim Fügen der beiden Bleche kann so verfahren werden, daß die Blechlaschen einzeln und/oder gruppenweise und/oder alle zugleich gefügt werden. Insbesondere das gesamthafte Fügen aller Blechlaschen beschleunigt den Herstellungsvorgang. Das einzeln oder gruppenweise erfolgende Fügen von Blechlaschen gestattet eine Optimierung des Fügevorganges in Anpassung an Materialgegebenheiten oder sonstige Verbindungsbedingungen.

Die Erfindung wird anhand von in der Zeichnung dargestellten Ausführungsbeispielen erläutert. Es zeigt:
- Fig.1: eine schematisierte Rückansicht einer aus zwei Blechen bestehenden Sitzrücklehne,
- Fig.1a: den Schnitt A-A der Fig.1,
- Fig.1b: den Schnitt B-B der Fig.1,
- Fig.1c: den Schnitt C-C der Fig.1,
- Fig.2a-2c: eine Schrittfolge von Abwinkelungsvorgängen beim Zusammenbau zweier Bleche,
- Fig.3a-3c: den Fig.2a-2c entsprechende Darstellungen abweichend ausgebildeter Laschen, und
- Fig.4,5: unterschiedlich ausgebildete Schweißanordnungen.

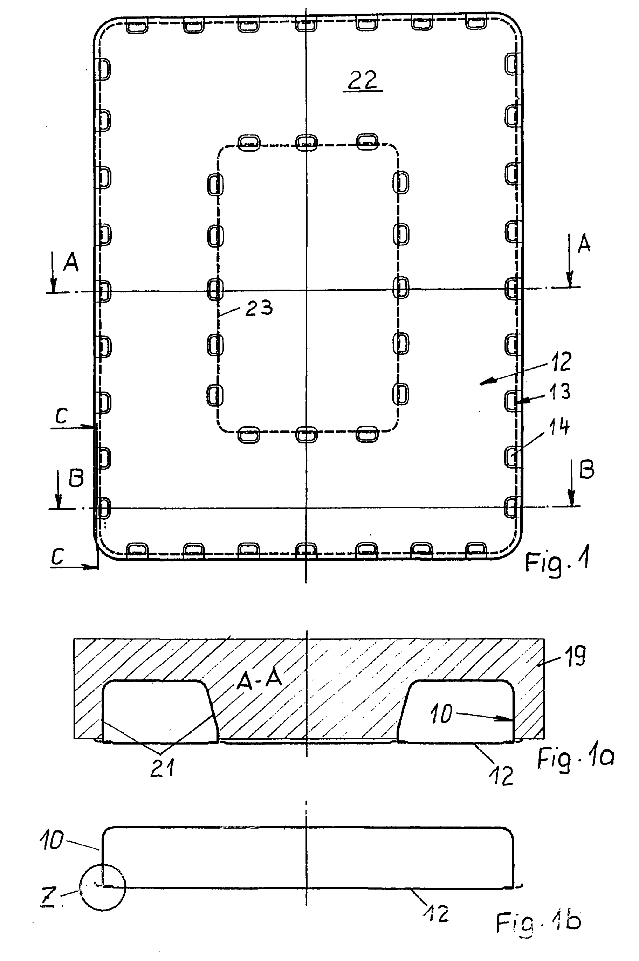

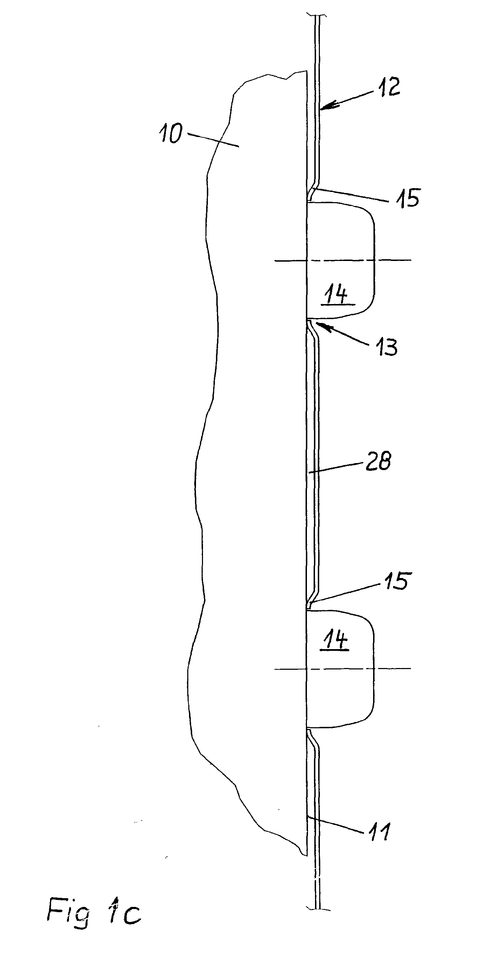

Die in Fig.1 bis 1b dargestellte Sitzrücklehne eines Kraftfahrzeugs besteht im wesentlichen aus einer Blechschale als zweites Blech 12 und aus einem U-förmig vorspringenden Formteil als erstes Blech 10. Während das zweite Blech 12 im wesentlichen flach ausgebildet ist, ist das erste Blech 10 ein Formteil, das gem. Fig.1a abgewinkelte Blechwände 21 aufweist, die eine im Bereich des Schnittes A-A U-förmige Ausgestaltung haben. Im unteren Bereich des Schnittes B-B und im oberen Bereich 22 der Sitzrücklehne ist das Blech ohne die aus Fig.1a ersichtliche Mittenvertiefung ausgebildet. Die Sitzrücklehne wird mit der erforderlichen nicht dargestellten Polsterung ausgestattet. Abweichend von den bekannten Schweißverbindungen sind die Bleche 10,12 mechanisch ineinander gehalten zusammengebaut. Die dadurch gegebene Formschlüssigkeit kommt insbesondere der Verbindungsfestigkeit und der Stabilität der miteinander verschweißten oder verklebten Bleche zugute. Der Zusammenbau wird mit Blechlaschen 14 und Durchsteckschlitzen 13 vorgenommen. Die Durchsteckschlitze 13 befinden sich in dem Blech 12 und die Blechlaschen 14 sind Bestandteile einer Blechkante 11 des ersten Blechs 10. Fig.1c zeigt die Ausbildung dieser Blechkante 11 über einen Teil ihrer Länge. Die Blechlaschen 14 sind dabei nicht abgewinkelt. Sie erstrecken sich in der Ebene des Blechs 10 und sind durch Durchsteckschlitze 13 hindurchgesteckt, die sich im zweiten Blech 12 befinden. Die Fig.2a bis 5 lassen die Durchsteckschlitze erkennen. Sie sind gem. Fig.1 mit vorbestimmten Abständen zueinander um den Außenumfang des Blechs 12 und in dessen Mittelbereich vorhanden, der durch die Position von abgewinkelten Blechwänden 21 des U-förmigen ersten Blechs 10 bestimmt ist. Fig.1a zeigt, daß eine Blechwand 21 auf einen Kantenbereich des Blechs 12 stößt, während die Position einer anderen, inneren Blechwand 21 in Fig.1 durch die gestrichelte Linie 23 gekennzeichnet ist. Im Bereich dieser Linie 23 sind die Durchsteckschlitze 13 ebenfalls so ausgebildet, daß an dem ersten Blech 10 vorhandene Blechlaschen 14 hindurchgesteckt werden können. Fig.1 zeigt dabei an allen mechanischen Verbindungsstellen abgewinkelte Blechlaschen 14.

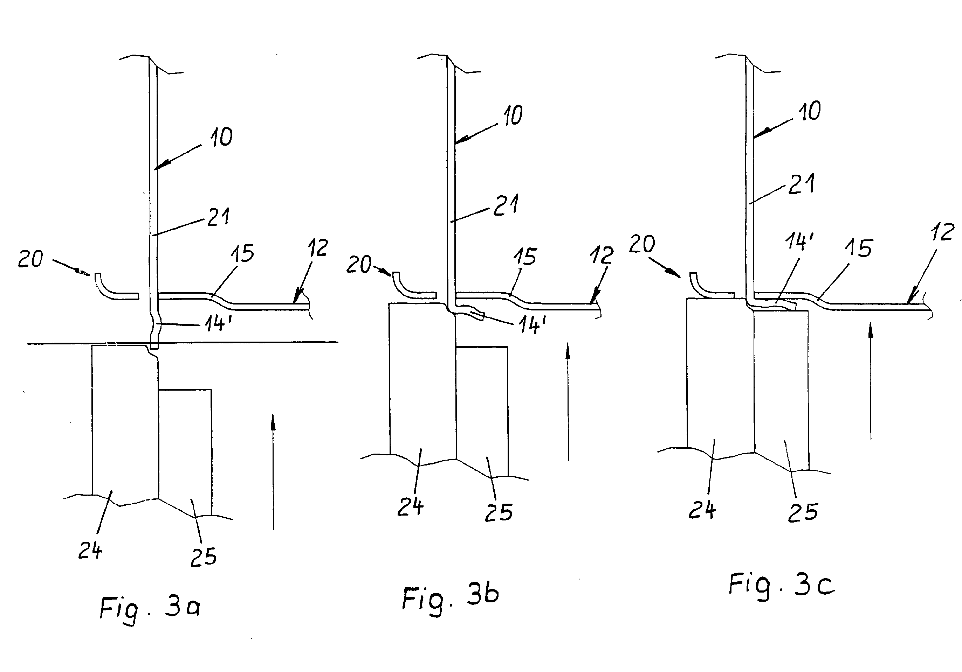

Das Abwinkeln der Blechlaschen 14 erfolgt gemäß den Fig.2a bis 2c bzw. 3a bis 3c. Beide Figurenreihen unterscheiden sich lediglich durch die Ausbildung der Blechlaschen 14 dahingehend, daß im Falle der Fig.3a bis 3c die Blechlaschen 14 mit einem Schweiß- oder Klebepunkt ausgebildet sind, also entsprechende Verformungen 14' aufweisen, die eine Kontaktgabe zwischen der abgewinkelten Lasche 14 und dem entsprechenden Anlagebereich des Blechteils 12 verbessern, insbesondere eine elektrische Kontaktgabe.

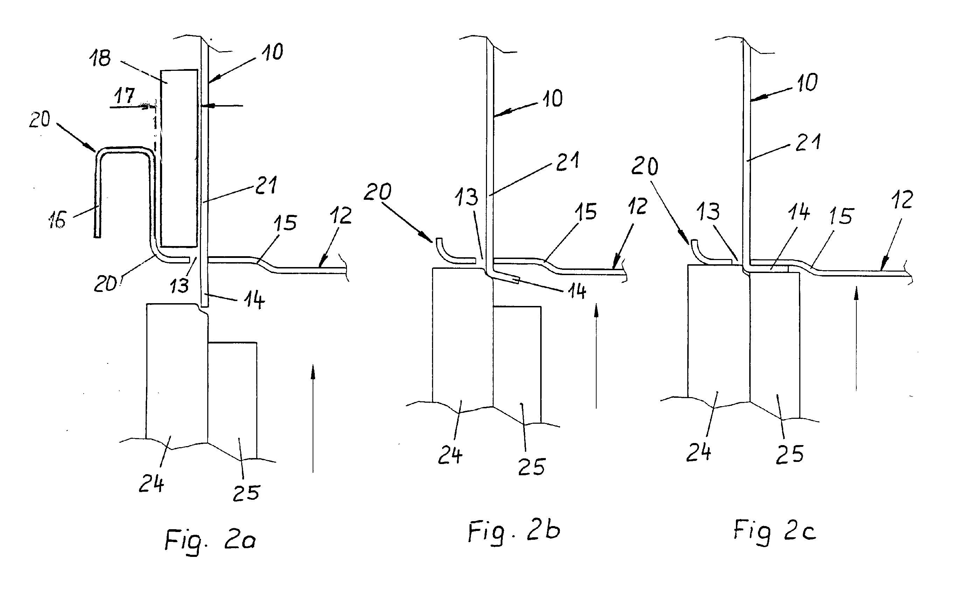

Nach einem Durchstecken der Blechlaschen 14 durch die Durchsteckschlitze 13 ist die in den Fig.1c, 2a und 3a dargestellte Positionierung gegeben. Es wird ein Stempelpaar mit den Stempeln 24,25 angewendet, welche die Blechlaschen 14 auf einander folgend verformen. Aus einer in Fig.2a,3a dargestellten Stellung heraus drückt der Stempel 24 die Laschen 14 in die in Fig.2b, 3b dargestellte Stellung und nachfolged wird der Stempel 25 auf die vorverformte Lasche 14 gedrückt, bis diese die in Fig.2c,3c dargestellte Stellung hat.

Das bei dem vorbeschriebenen Vorformungsvorgang verwendete Widerlager kann eine Matrize 19 sein, mit der das erste Blech 10 zu einem U-förmigen Formteil gem. Fig.1a verformt wurde. Fig.1a zeigt das zweite Blech 12 auf der Matrize 19 aufliegend. Das vorbeschriebene Vorgehen ist massenfertigungsgerecht.

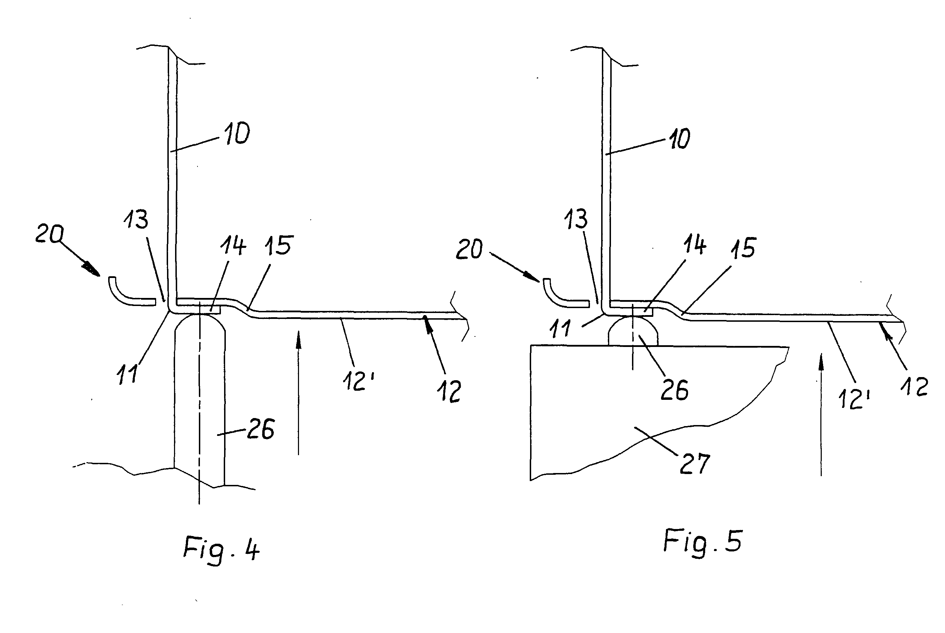

Massenfertigungsgerecht ist auch das nachfolgende Verschweißen. Hierzu zeigt Fig.4 eine Schweißelektrode 26, mit der ein Schweißpunkt hergestellt wird. Fig.5 zeigt eine Halterung 27 für eine Vielzahl von Schweißelektroden 26, die hintereinander aufgereiht zu denken sind, so daß der Verschweißvorgang gruppenweise erfolgen kann oder gesamthaft, so daß also alle Blechlaschen 14 gemeinsam mit dem Blech 12 verschweißt werden. Hierbei kann so vorgegangen werden, daß die Matrize 19 als Schweißgegenelektrode fungiert. Der Einsatz von Einzelschweißstellen herstellenden Vorrichtungen ist dabei nicht erforderlich.

Der Zusammenbau der Bleche 10,12 zeichnet sich dadurch aus, daß im Bereich der Durchsteckschlitze 13 Abkröpfungen 15 vorhanden sind. Infolgedessen wird die Kante des Blechs 10 bzw. des von ihm gebildeten Formteils auf Abstand 28 vom Blech 12 gehalten. Bei wechselnden Belastungen der Bleche 10,12, wie sie im Kraftfahrzeugbetrieb vorkommen, kann es nicht zu unerwünschten Kontakten der Bleche 10,12 kommen, was beispielsweise mit Quietschgeräuschen verbunden wäre.

Die Abkröpfungen 15 sind gem. den Darstellungen so tief und so groß, daß sie etwa der Blechdicke des Blechs 10 entsprechen und die abgewinkelten Blechlaschen 14 aufnehmen. Infolgedessen legen die abgewinkelten Blechlaschen 14 bündig mit der Blechfläche 12', die dem ersten Blech 10 abgewendet ist, vgl. z.B. Fig.4. Die in diesem Bereich abgewinkelte Blechkante 11 kann daher nicht stören, weil sie nicht über das Niveau der Blechfläche 12' vorspringt.

Aus den Figuren ist eine Randstruktur 20 ersichtlich, die Bestandteil des Blechs 12 ist, jedoch von dem ersten Blech 10 bzw. dessen Seitenwand 21 bzw. deren Abwinkelung 14 nach außen vorspringt, also von der Schweißstelle weg. Diese Randstruktur 20 kann beliebig sein. Fig.2a zeigt eine beispielsweise Ausbildung eines Spannstreifens 16, der dem Formteil parallel ist, also um den Außenumfang des in Fig.1 dargestellten Blechs 12 herumläuft. Ein solcher Spannstreifen 16 dient der Befestigung einer Bespannung eines Sitzes, der mit nicht dargestellten Polsterteilen abgepolstert ist. Der Spannstreifen 16 kann der äußeren Wand 21 so dicht wie möglich benachbart sein. Die Schweißstelle, die ihm abgewendet ist, stört dabei nicht. Es ist dabei möglich, die herkömmliche Gestaltung von Spannstreifen 16 zu Gunsten platzsparender Streifen abzuändern.

Die dem Spannstreifen 16 abgewendete Anordnung der Schweißstelle hat außerdem den Vorteil, daß dem Blech 10 und zugleich auch dem Spannstreifen 16 dicht benachbarte Beschlagteile 18 angeordnet werden können. Ein solches Rücklehnenbeschlagteil 18 ist in Fig.2a schematisch dargestellt. Es kann in dem Abstandsbereich 17 angeordnet sein, welchen der Spannstreifen 16 mit dem Blech 10 bildet. Jedenfalls braucht die Ausbildung und Anordnung des Rücklehnenbeschlagteils 18 keine Rücksicht auf eine Ausbildung einer Schweißstelle zu nehmen, die im Bereich der Kantenstruktur 20 anzuordnen wäre. Die Ausbildung der Randstruktur 20 und eines etwaigen Beschlagteils 18 können unbehindert durch eine Schweißstellenausbildung vorgenommen werden.

## Patentansprüche

1. Fügeverbindung zweier Bleche, insbesondere zweier Bleche einer Sitzrücklehne, insbesondere eines Kraftfahrzeugs, mit einem ersten Blech, das eine abgewinkelte Blechkante (11) hat, die an einem eine Randstruktur (20) aufweisenden zweiten Blech (12) anliegt und in einem Anlagebereich gefügt ist, **dadurch gekennzeichnet, daß** das zweite Blech (12) mit einer vorbestimmten Anzahl von Durchsteckschlitzen (13) versehen ist, und daß das erste Blech (10) an seiner abgewinkelten Blechkante (11) durch die Durchsteckschlitze (13) hindurchgesteckte und abgewinkelte Laschen (14) hat, die an einer dem ersten Blech (10) abgewendeten Blechfläche (12') des zweiten Blechs (12) und der Randstruktur (20) abgewendet gefügt sind.

2. Fügeverbindung nach Anspruch 1, **dadurch gekennzeichnet, daß** das erste Blech (10) in einem Winkel zum zweiten Blech (12) angeordnet ist.

3. Fügeverbindung nach Anspruch 1 oder 2, **dadurch gekennzeichnet, daß** das zweite Blech (12) mit dem ersten Blech (10) eine im Querschnitt geschlossene hohle Struktur bildet.

4. Fügeverbindung nach einem oder mehreren der Ansprüche 1 bis 3, **dadurch gekennzeichnet, daß** die beiden Bleche (10,12) in Kantenbereichen der von ihnen gebildeten hohlen Struktur gefügt sind.

5. Fügeverbindung nach einem oder mehreren der Ansprüche 1 bis 4, **dadurch gekennzeichnet, daß** das zweite Blech (12) im Bereich seiner Durchsteckschlitze (13) zum ersten Blech (10) hin abgekröpft ist und die abgewinkelten Laschen (14) des ersten Blechs (10) in Abkröpfungen (15) des zweiten Blechs (12) mit diesem bündig angeordnet sind.

6. Fügeverbindung nach einem oder mehreren der Ansprüche 1 bis 5, **dadurch gekennzeichnet, daß** das zweite Blech (12) eine Blechschale einer Sitzrücklehne eines Kraftfahrzeugsitzes ist, und daß das erste Blech (10) als zu einer sitzenden Person U-förmig vorspringendes Formteil ausgebildet ist, das mit zwei abgewinkelten Blechwänden (21) an dem zweiten Blech (12) gefügt ist.

7. Fügeverbindung nach einem oder mehreren der Ansprüche 1 bis 6, **dadurch gekennzeichnet, daß** die Blechschale einen dem Formteil parallelen Spannstreifen (16) aufweist, der den Durchsteckschlitzen (13) mit Abstand (17) benachbart ist.

8. Fügeverbindung nach einem oder mehreren der Ansprüche 1 bis 7, **dadurch gekennzeichnet, daß** zwischen dem Spannstreifen und dem Formteil ein Rücklehnenbeschlagteil (18) in der Nähe von Durchsteckschlitzen (13) angeordnet sind.

9. Fügeverbindung nach einem oder mehreren der Ansprüche 1 bis 8, **dadurch gekennzeichnet, daß** die Laschen (14) durch die Durchsteckschlitze (13) hindurchgesteckte, Fügepunkte bildende Verformungen (14') aufweisen.

10. Fügeverbindung nach einem oder mehreren der Ansprüche 1 bis 9, **dadurch gekennzeichnet, daß** das Fügen als Schweißung oder Klebung ausgeführt ist.

11. Fügeverbindung nach einem oder mehreren der Ansprüche 1 bis 10, **dadurch gekennzeichnet, daß** zwischen zwei gefügten Laschen (14) des ersten Blechs (10) mindestens eine Lasche vorhanden ist, die durch einen Durchsteckschlitz (13) hindurchgesteckt und abgewinkelt ist, oder daß das erste Blech (10) zwischen zwei gefügten Laschen (14) laschenfrei ausgebildet und mit dem zweiten, bedarfsweise hier von Durchsteckschlitzen (13) freien Blech (12) stirnseitig verklebt ist.

12. Verfahren zum Verbinden zweier hochbelasteter Bleche, insbesondere zweier Bleche einer Sitzrücklehne, insbesondere eines Kraftfahrzeugs, bei dem ein erstes Blech (10) mit einer abgewinkelten Blechkante (11) an ein zweites Blech (12) angelegt und in einem Anlagebereich gefügt wird, **dadurch gekennzeichnet, daß** als zweites Blech (12) ein solches mit einer vorbestimmten Anzahl von Durchsteckschlitzen (13) verwendet wird, und daß als erstes Blech (10) eines mit vorstehenden Laschen (14) verwendet wird, die durch die Durchsteckschlitze (13) hindurchgesteckt werden, wonach ein Abwinkeln der Blechkante (11) im Bereich der Blechlaschen (14) erfolgt, die danach an einer dem ersten Blech (10) abgewendeten Blechfläche (12') des zweiten Blechs (12) verschweißt oder verklebt werden.

13. Verfahren nach Anspruch 12, **dadurch gekennzeichnet, daß** das erste Blech (10) mit einer Matrize (19) zu einem U-förmigen Formteil verformt wird, mit dessen Blechlaschen (14) das zweite Blech (12) mit seinen Durchsteckschlitzen (13) zum Verformen der Laschen (14) zusammengesteckt wird.

14. Verfahren nach Anspruch 12 oder 13, **dadurch gekennzeichnet, daß** das Verformen der Blechlaschen (14) und das anschließende Verschweißen in derselben Matrize (19) erfolgt, wobei letztere als Schweißgegenelektrode fungiert.

15. Verfahren nach einem oder mehreren der Ansprüche 12 bis 13, **dadurch gekennzeichnet, daß** die Blechlaschen (14) einzeln und/oder gruppenweise und/oder alle zugleich gefügt werden.
